# EUROPEAN PATENT APPLICATION

(11) **EP 2 654 037 A2**
(43) Date of publication of application: **23.10.2013**
(21) Application number: 11849788.2
(22) Date of filing: 15.12.2011
(51) Int. Cl.: G09G 5/36, G06F 3/00, H04N 21/43

(54) **DISPLAY CONTROL APPARATUS, PROGRAM AND DISPLAY CONTROL METHOD**

(30) Priority: 15.12.2010 JP 2010279524
(71) Applicant: Samsung Electronics Co., Ltd., Suwon-si, Gyeonggi-do, 443-742 (KR)
(72) Inventor: SHIMIZU, Hiromi, Yokohama, Kanagawa 230-0027 (JP)
(74) Representative: Bray, Richard Anthony
(86) International application number: PCT/KR2011/009652
(87) International publication number: WO 2012/081913

(57) **Abstract**

A display control apparatus includes an operation detection unit detecting an operation indicating a movement direction, an object analysis unit specifying an object to which a focus is moved by a one-time operation among objects displayed on a screen and operated by a user, as an object of a first group, and a display properties setting unit setting display properties of the object of the first group so that the user distinguish the object of the first group and other objects.

## Description

### BACKGROUND OF THE INVENTION

### 1. Field of the Invention

The present invention relates to a display control apparatus, a program, and a display control method.

### 2. Description of the Related Art

A display unit of an apparatus such as a television receiver set, a personal computer, a mobile phone, etc., which receive data broadcasting, displays multiple objects such as a menu, a diagram, a text, an icon, a window, etc. for a user to select. An improved object display technique is needed for a user to easily select a desired and operable object among the multiple objects displayed on the display unit.

For example, Japanese Patent Publication No. 2004-354540 discloses an invention to display an object selected by a cursor in three dimensionally without a sense of mismatch. Also, Japanese Patent Publication No. 2005-49668 discloses an invention to change a display form of an object according to information about the properties of the object.

However, when a user operates key buttons of a remote controller of a television receiver set or a mobile phone to indicate directions and a focus moves according to the operation, the above inventions fail to make the user recognize an object to which the focus is moved by, for example, a next one-time operation. As a result, since the user cannot anticipate an object to which the focus is moved by a next one-time operation, the user may feel burden for the operation. For example, a user may not determine a direction to move a focus to a desired object. Also, for example, a user may move the focus to an inoperable object.

### SUMMARY OF THE INVENTION

The present invention provides a display control apparatus, a program, and a display control method, which may reduce burden of a user in moving a focus in a user interface.

According to an aspect of the present invention, a display control apparatus includes an operation detection unit detecting an operation indicating a movement direction, an object analysis unit specifying an object to which a focus is moved by a one-time operation among objects displayed on a screen and operated by a user, as an object of a first group, and a display properties setting unit setting display properties of the object of the first group so that the user distinguish the object of the first group and other objects.

The display properties may include a depth of an object in three dimensional display, and the display properties setting unit may set a value of a depth of the object of the first group to be different from a value of a depth of other object.

The object analysis unit may further specify an object to which a focus is moved by two or more times of operations as an object of a second group, and the display properties setting unit may further set display properties of the object of the second group so that the user distinguish the object of the first group, the object of the second group, and other objects.

The object analysis unit may further specify a frequency of operations needed to move the focus to a corresponding object with respect to each object, and the display properties setting unit may set a value of the display properties of each object according to the frequency of operations.

The display control apparatus may further include a setting change unit that allows the user to select the number of candidates of the set properties value.

The display control apparatus may further include a setting change unit that allows the user to select any one of predetermined two or more candidates of display properties as the display properties.

According to another aspect of the present invention, a program for functioning a computer as a device, the computer detecting an operation to indicate a movement direction and controlling a display apparatus, includes an object analysis unit specifying an object to which a focus is moved by a one-time operation among objects displayed on a screen and operated by a user, as an object of a first group, and a display properties setting unit setting display properties of the object of the first group so that the user distinguish the object of the first group and other objects.

According to another aspect of the present invention, a display control method includes specifying an object to which a focus is moved by a one-time operation among objects displayed on a screen and operated by a user, as an object of a first group, and setting display properties of the object of the first group so that the user distinguish the object of the first group and other objects.

### BRIEF DESCRIPTION OF THE DRAWINGS

The above and other features and advantages of the present invention will become more apparent by describing in detail exemplary embodiments thereof with reference to the attached drawings in which:
FIG. 1 is a schematic diagram illustrating a display control system according to an embodiment of the present invention;
FIG. 2 is a block diagram illustrating an example of a structure of the display control system of FIG. 1;
FIG. 3 is a view schematically illustrating an example of object data stored in an object data memory unit;
FIG. 4 is a view schematically illustrating an example of a result of specifying objects of a first group and a second group;
FIG. 5 is a view schematically illustrating an example of a result of specifying frequency of operations needed to move a focus to each object;
FIG. 6 is a view schematically illustrating a screen displayed as a result of setting display properties of an object of the first group;
FIG. 7 is a view schematically illustrating objects displayed as a result of setting display properties of objects of the first group and the second group;
FIG. 8 is a view schematically illustrating objects displayed as a result of setting display properties of each object according to the frequency of operations;
FIG. 9 is a view schematically illustrating a result of setting other display properties of an object of the first group; and
FIG. 10 is a flowchart for explaining an example of a process flow by a display control apparatus according to an embodiment of the present invention.

### DETAILED DESCRIPTION OF THE INVENTION

The attached drawings for illustrating exemplary embodiments of the present invention are referred to in order to gain a sufficient understanding of the present invention, the merits thereof, and the objectives accomplished by the implementation of the present invention. Hereinafter, the present invention will be described in detail by explaining exemplary embodiments of the invention with reference to the attached drawings. Like reference numerals in the drawings denote like elements.

As used herein, the term "and/or" includes any and all combinations of one or more of the associated listed items. Expressions such as "at least one of," when preceding a list of elements, modify the entire list of elements and do not modify the individual elements of the list.

In the following description, an embodiment of the present invention is described in order of [1: Summary of a display control system according to an embodiment], [2: Structure of a display control apparatus according to an embodiment], and [3: Example of a process flow].

### [1: Summary of a display control system according to an embodiment]

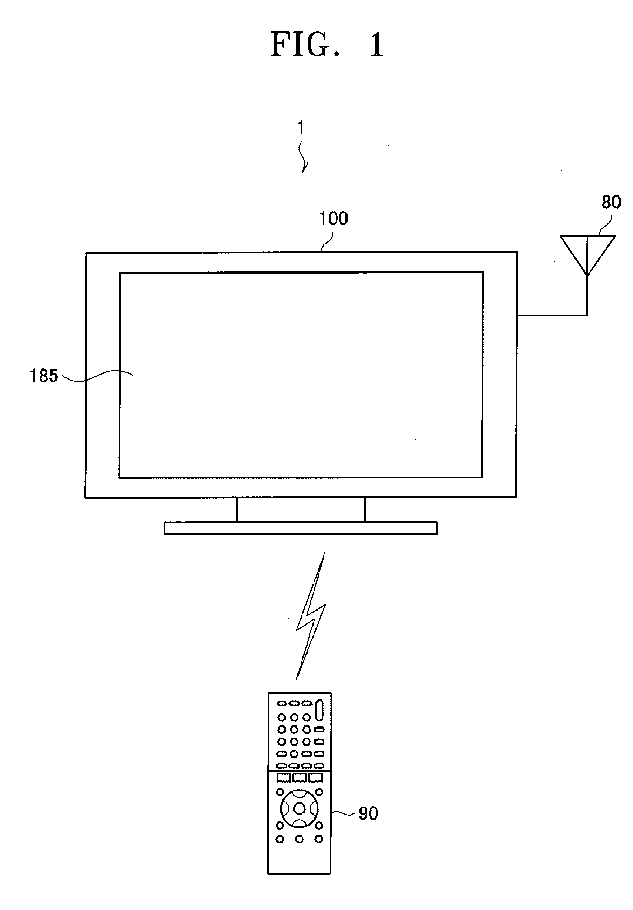

In the present embodiment, a display control system according to an embodiment of the present invention is a system to receive broadcasting signals of digital television broadcasting and display a content included in the broadcasting signals. FIG. 1 is a schematic diagram illustrating a display control system 1 according to an embodiment of the present invention. Referring to FIG. 1, the display control system 1 includes a receiving antenna 80, an operation input device 90, and a display control apparatus 100.

### (Receiving antenna 80)

The receiving antenna 80 receives a broadcasting signal of digital television broadcasting and provides a received broadcasting signal to the display control apparatus 100. For example, the receiving antenna 80 is an ultra-high frequency (UHF) antenna that receives a broadcasting signal of ground digital television broadcasting. Alternatively, the receiving antenna 80 may be a broadcasting satellite (BS) digital antenna or a communication satellite (CS) digital antenna that receives digital satellite broadcasting.

### (Operation input device 90)

The operation input device 90 transmits an operation signal to the display control apparatus 100 according to a user operation. The user operation includes an operation to indicate a movement direction. For example, the operation input device 90 may be a remote controller that includes a button pressed by a user for the operation of the display control apparatus 100, a transmission circuit for transmitting an operation signal using an infrared ray according to the pressing of the button, and a light emission device. The button includes, for example, directional buttons (up/down/left/right keys or other sorts of buttons) for indicating a movement direction of a focus on an object displayed on the display control apparatus 100. Also, instead of the operation input device 90, a structure in which the display control apparatus 100 replace the operation input device 90 may be provided. For example, the display control apparatus 100 may include an operation unit such as a button. Furthermore, the display control apparatus 100 may include a sensing device such as a microphone for capturing sound and a camera for capturing an image, and a recognition unit for recognizing predetermined sound and gesture from sound and an image to generate a command.

### (Display control apparatus 100)

The display control apparatus 100 displays on a display unit 185 a content included in a broadcasting signal provided by the receiving antenna 80. Also, the display control apparatus 100 is operated by a user as it receives an operation signal from the operation input device 90. For example, the display control apparatus 100 may be a television receiver set corresponding to digital television broadcasting.

In detail, the display control apparatus 100 displays on the display unit 185 an object operated by a user. An object may be, for example, a menu, a diagram, a text, an icon, a window, etc. A focus is disposed on any one of the objects so that a user may select an object. When receiving an operation signal according to the operation to indicate a movement direction, the display control apparatus 100 moves the focus to an object that is operable and located in a corresponding direction. In order for a user to recognize an object to which the focus may move by a next one-time operation, the display control apparatus 100 displays objects such that the user can distinguish the object to which the focus may move by a next one-time operation from other objects.

Also, the object displayed by the display control apparatus 100 is not limited to the object included in the content included in the broadcasting signal. For example, the display control apparatus 100 may display on the display unit 185 the object included in the content that is automatically stored. Also, the display control apparatus 100 may display on the display unit 185 an object generated by a program stored in the display control apparatus 100. Also, instead that the display control apparatus 100 includes the display unit 185, a display apparatus that is externally connected to the display control apparatus 100 may be separately provided. In this case, the display of the external display apparatus may be controlled by the display control apparatus 100.

Although a television system that receives digital television broadcasting is described as an embodiment of a display control system, the present invention is not limited thereto. For example, a content source is not limited to a broadcasting signal of digital television broadcasting. For example, the display control system 1 may include a network connection device such as a router instead of the receiving antenna 80, whereas the display control apparatus 100 may receive a content from a network via a corresponding network connection device. Also, for example, the display control system 1 may include a content providing apparatus (not shown) that stores a content, instead of the receiving antenna 80, and the display control apparatus 100 may receive the content from the corresponding content providing apparatus.

Also, for example, the display control apparatus 100 is not limited to a television receiver. The display control apparatus 100 may be a user device having operation input keys such as a mobile phone, a mobile game device, a music player, etc. or image reproduction apparatuses such as Blu-ray® disc (BD) player, a digital versatile disc (DVD) player, etc.

### [2: Structure of a display control apparatus according to an embodiment]

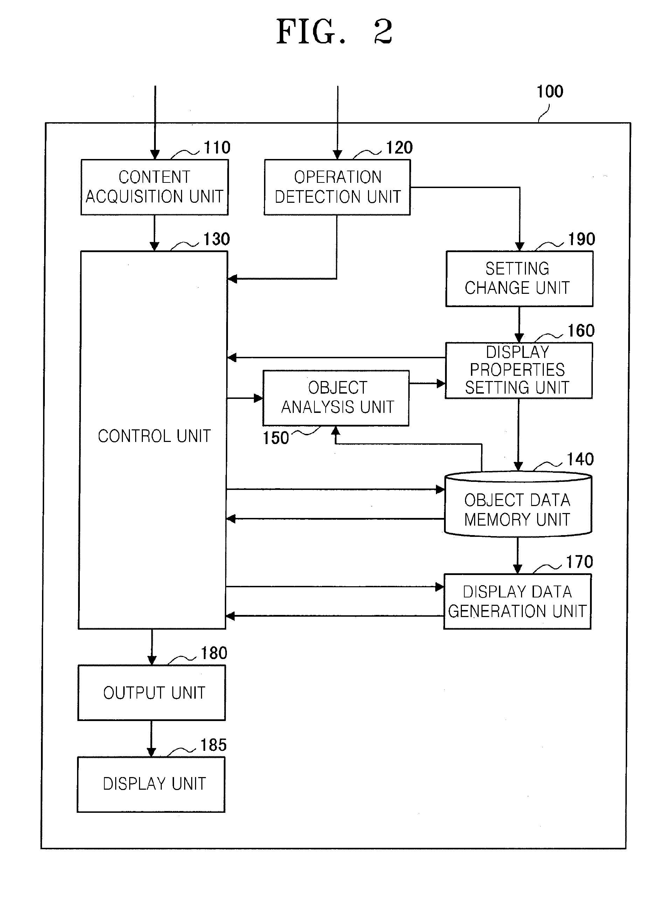

An example of a detailed structure of the display control apparatus 100 is described below with reference to FIGS. 2 to 9. FIG. 2 is a block diagram illustrating an example of a structure of the display control system 100 of FIG. 1. Referring to FIG. 2, the display control apparatus 100 may include a content acquisition unit 110, an operation detection unit 120, a control unit 130, an object data memory unit 140, an object analysis unit 150, a display properties setting unit 160, a display data generation unit 170, an output unit 180, a display unit 185, and a setting change unit 190.

### (Content acquisition unit 110)

The content acquisition unit 110 acquires content data from a broadcasting signal. For example, the content acquisition unit 110 demodulates the broadcasting signal provided from the receiving antenna 80 and decodes transport stream (TS) packets obtained from the demodulation and thus acquires image data, sound data, and additional data as content data. The content acquisition unit 110 outputs the corresponding content data to the control unit 130. The additional data may include data for defining the structure and arrangement of objects such as characters, diagrams, still images, etc. and data for the operation of each object. The additional data may be, for example, data following a broadcast markup language (BML) format.

### (Operation detection unit 120)

The operation detection unit 120 receives an operation signal from the operation input device 90 and detects an operation by a user. In the present embodiment, the user operation includes at least an operation indicating a movement direction. When detecting a user operation that indicates a movement direction, the operation detection unit 120 generates movement direction information that indicates a corresponding movement direction and outputs the generated movement direction information to the control unit 130. Also, the operation detection unit 120 directing other operations generates information corresponding to the operation and outputs the generated information to the control unit 130. Also, the operation detection unit 120 outputs the movement direction information and the information corresponding to the other operation not only to the control unit 130 but also to the setting change unit 190.

### (Control unit 130)

When receiving content data from the content acquisition unit 110, the control unit 130 generates object data based on the additional data included in the corresponding content data and stores the corresponding object data in the object data memory unit 140. For example, the control unit 130 generates object data of an object displayed on a screen (not shown) to be operated by a user, from a BML document that is included in the additional data of the content data. In the present embodiment, the object data may include identification information, focus control information, an analysis result, and one or more display properties to identify each object displayed on the screen to be operated by a user. The details of object data will be described later.

Also, the control 130 requests the object analysis unit 150 to perform a process to newly set a value of "display properties" of each generated object data. Also, the control unit 130 requests the display data generation unit 170 to perform a process to generate a display image to be displayed on the display unit 185. When receiving a notification of completion of the generation of the display image from the display data generation unit 170, the control unit 130 outputs the generated display image to the output unit 180.

The control unit 130 controls the display of a content and a user interface by the display unit 185 according to the user operation detected by the operation detection unit 120. For example, when the movement direction information is input by the operation detection unit 120, the control unit 130 updates information about "the existence of a focus" among object data of each object stored in the object data memory unit 140. The control unit 130 requests the object analysis unit 150 to perform a process to update a value of "the display properties" of object data of each object.

Also, when a part or the whole of an object displayed on the screen operated by a user is changed by an event such as a change of a display screen due to selection of a menu, the control unit 130 updates information of the object data memory unit 140. Then, the control unit 130 requests the object analysis unit 150 to perform a process to update a value of "the display properties" of object data of each object.

### (Object data memory unit 140)

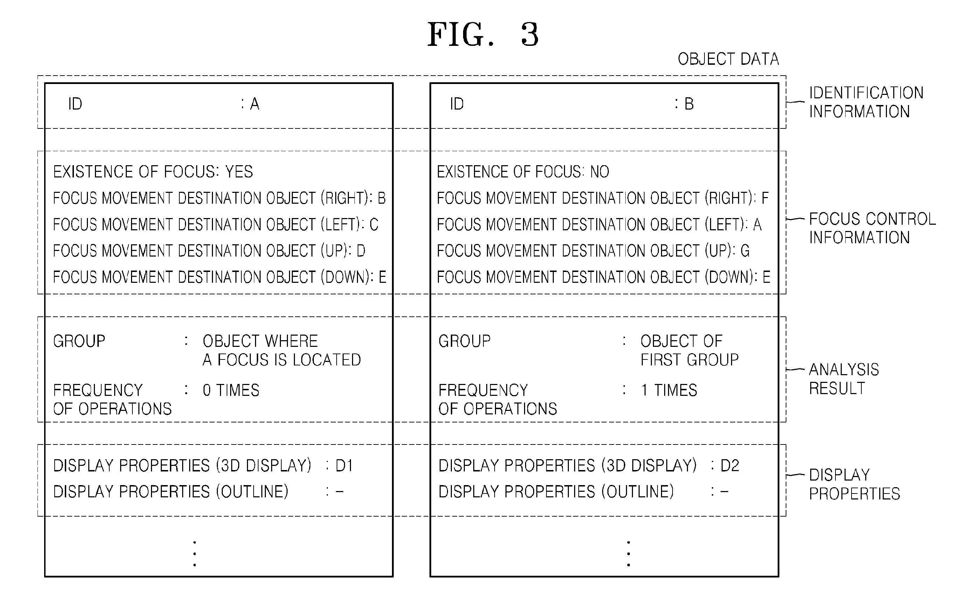

The object data memory unit 140 stores object data of each object. FIG. 3 is a view schematically illustrating an example of object data stored in the object data memory unit 140. Referring to FIG. 3, the object data may include "ID", "existence of a focus", "focus movement destination object (right)", "focus movement destination object (left)", "focus movement destination object (up)", "focus movement destination object (down)", "group", "frequency of operations", "display properties (3D display)", and "display properties (outline)".

The "ID" is identification information to uniquely identify an object. The "existence of a focus" is information indicating whether a focus is located on each object. The "focus movement destination object (right)" indicates the ID of an object that is a target object of a focus when the focus is located on a corresponding object and an operation indicating the movement in the right direction is detected. The "focus movement destination object (left)" indicates the ID of an object that is a target object of a focus when the focus is located on a corresponding object and an operation indicating a movement in the left direction is detected. The "focus movement destination object (up)" indicates the ID of an object that is a target object of a focus when the focus is located on a corresponding object and an operation indicating a movement in the upward direction is detected. The "focus movement destination object (down)" indicates the ID of an object that is a target object of a focus when the focus is located on a corresponding object and an operation indicating a movement in the downward direction is detected.

For example, when the additional data is a BML document, the "ID" properties of the BML document corresponds to the "ID" and the properties of "nav-index", "nav-right", "nav-left", "nav-up", and "nav-down" may respectively correspond to the focus movement destination object (right), the focus movement destination object (left), the focus movement destination object (up), and the focus movement destination object (down).

The "existence of a focus", the "focus movement destination object (right)", the "focus movement destination object (left)", the "focus movement destination object (up)", and the "focus movement destination object (down)" are pieces of focus control information that are recorded and update by the control unit 130. On the other hand, the "group" and the "frequency of operations" are recorded and updated as results of analysis by the object analysis unit 150 that is described later. The "group" is information indicating a group to which an object belongs. For example, a corresponding group refers to any one of an object of a first group, an object of a second group, an object where a focus is located, or other objects. Also, the "frequency of operations" refers to information indicating the frequency of operations needed to move the focus to each object.

The "display properties (3D display)" and the "display properties (outline)" refer to pieces of information about display properties of each object that may be recorded and updated by the display properties setting unit 160 that is described later. The display image is generated according to the above display properties. For example, the "display properties (3D display)" refers to information indicating the depth of an object in the 3D display and the "display properties (outline)" refers to information indicating a sort of an outline surrounding an object. Also, the present invention is not limited to the example of FIG. 3 and other display properties such as color, transmissivity, or a blanking speed of an object may be defined as well.

### (Object analysis unit 150)

The object analysis unit 150 specifies from the object data an object displayed on the screen and operated by the user, and specifies as an object of a first group an object to which the focus may be moved by a one-time operation to indicate a movement direction, among particular objects. Also, the object analysis unit 150 further specifies frequency of operations needed to move the focus to a corresponding object for each object. In detail, the object analysis unit 150 specifies, for example, an object in which the "existence of a focus" is "YES" from the object data stored in the object data memory unit 140. The object analysis unit 150 sets the "object where a focus is located" and the "frequency of operations" to be "0" in the "group" of a corresponding object. Next, the object analysis unit 150 specifies the ID set in each of the focus movement destination object (right), the focus movement destination object (left), the focus movement destination object (up), and the focus movement destination object (down) of the corresponding object as an ID of an object to which a focus may be moved by a one-time operation, that is, an ID of an object of the first group. The object analysis unit 150 sets the "object of the first group" and the "frequency of operations" to be "1" in the "group" of an object having the object ID of the first group that is stored in the object data memory unit 140.

Also, for example, the object analysis unit 150 further specifies an object to which the focus may be moved by two or more times of operations as an object of the second group. In detail, the object analysis unit 150 may specify, for example, an ID of an object to which the focus may be moved by a two-time operation based on the focus movement destination object (right), the focus movement destination object (left), the focus movement destination object (up), and the focus movement destination object (down) of the object specified as the object of the first group. Likewise, the object analysis unit 150 may sequentially specify an object to which the focus may be moved by operations of three or more times. The object analysis unit 150 updates values of the "group" and the "frequency of operations" of the object data of each specified object.

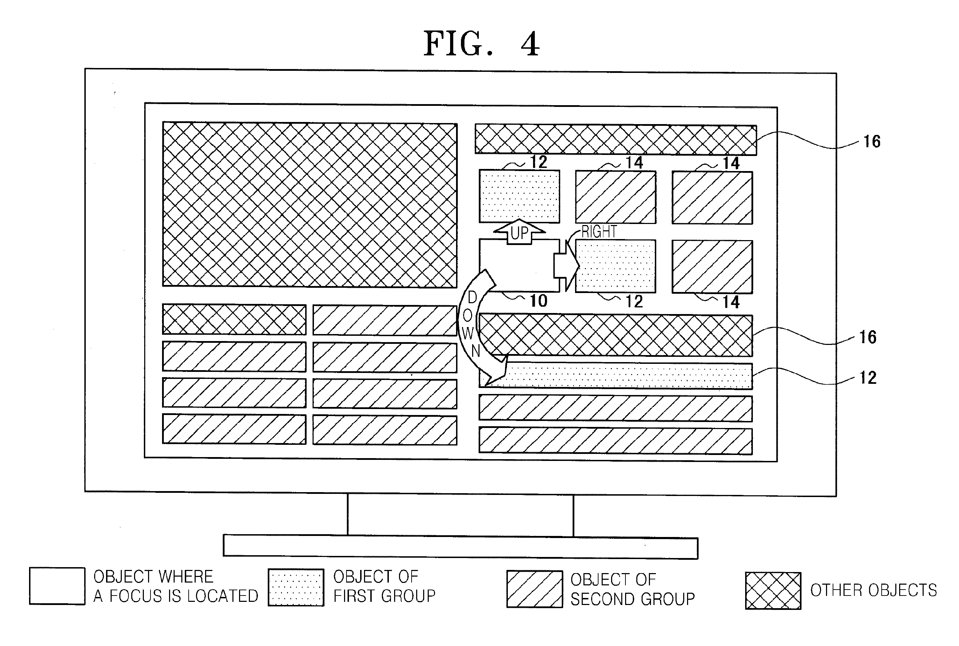

FIG. 4 is a view schematically illustrating an example of a result of specifying objects of the first group and the second group. Referring to FIG. 4, a focus exists on an object 10. Three objects 12 are specified as objects to which the focus may be moved by one-time operation indicating an upward direction, a downward direction, or a right direction. Also, objects 14 are specified by objects to which the focus may be moved by two or more times of operations. The "object of the first group" is stored in the "group" of the object data of the objects 12. The "object of the second group" is stored in the "group" of the object data of the objects 14.

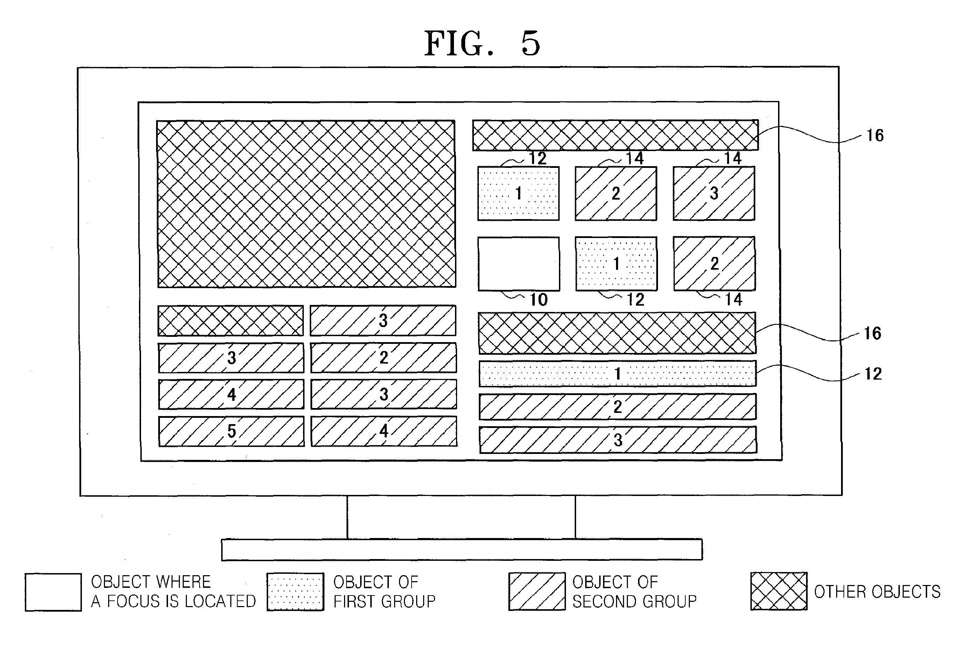

FIG. 5 is a view schematically illustrating an example of a result of specifying frequency of operations needed to move a focus to each object. Referring to FIG. 5, the frequency of operations needed to move the focus to a corresponding object with respect to each object is specified. The frequency indicated on each object of FIG. 5 is stored in the "frequency of operations" of each object data.

When the object of the first group and the object of the second group are specified as above, the object analysis unit 150 requests the display properties setting unit 160 to perform a process to update the "display properties" of each object data.

### (Display properties setting unit 160)

The display properties setting unit 160 sets display properties of an object of the first group so as to be distinguished by a user from other objects. For example, the display properties include a depth of an object in the 3D display, and the display properties setting unit 160 sets the depth of an object of the first group to be a value different from the value of a depth of a different object. In detail, the display properties setting unit 160 specifies, for example, an object having the "group" that is the "object of the first group" from the object data stored in the object data memory unit 140. Next, the display properties setting unit 160 stores "D2" in the "display properties (3D display)" of a corresponding object with respect to the object data memory unit 140. The "display properties (3D display)" is information indicating the depth of an object in the 3D display. Also, the display properties setting unit 160 specifies object data having the "group" that is the "object where the focus is located" among each object data stored in the object data memory unit 140. Next, the display properties setting unit 160 stores "D1" that is greater than "D2" in the "display properties (3D display)" of the corresponding object data with respect to the object data memory unit 140. Also, detailed values such as "D1" and "D2" may be fixedly defined in advance or may be changed by a user.

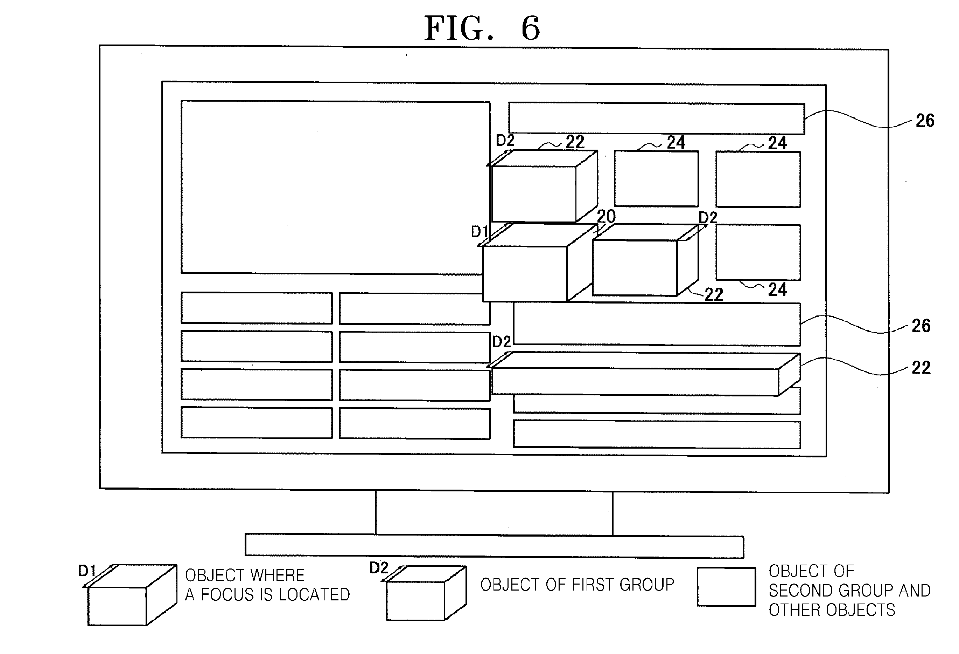

FIG. 6 is a view schematically illustrating a screen displayed as a result of setting display properties of an object of the first group. Referring to FIG. 6, since "D1" is stored in the "display properties (3D display)" of the object data of an object 20 where the focus is located, the object 20 is three dimensionally displayed at a depth of "D1". Also, since "D2" is stored in the "display properties (3D display)" of the object data of an object 22 of the first group, the object 22 is three dimensionally displayed at a depth of "D2". As such, the object of the first group and other objects may be distinguished by a user.

Also, for example, the display properties setting unit 160 further specifies the display properties of an object of the second group so that a user may distinguish the object of the first group, the object of the second group, and other objects. In detail, the display properties setting unit 160 specifies, for example, an object having the "group" that is the "object of the second group" from the object data stored in the object data memory unit 140. Next, the display properties setting unit 160 stores "D3" that is smaller than "D2" in the "display properties (3D display)" of the corresponding object with respect to the object data memory unit 140.

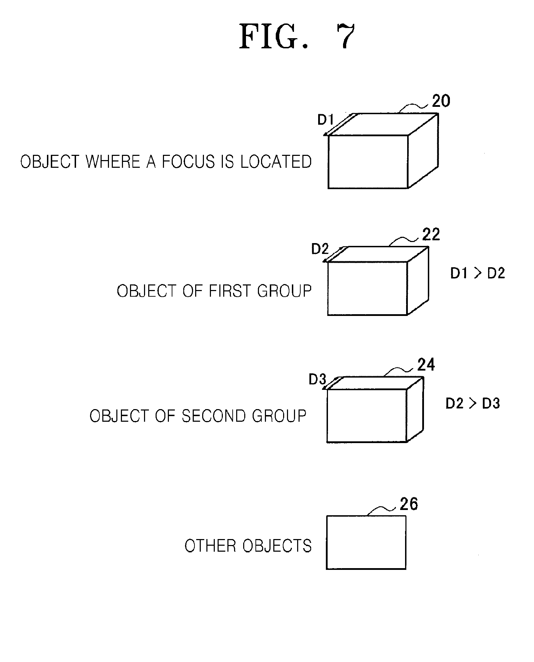

FIG. 7 is a view schematically illustrating objects displayed as a result of setting display properties of objects of the first group and the second group. Referring to FIG. 7, since "D3" is stored in the "display property (3D display)" of the object data of an object 24 of the second group, the object 24 is three dimensionally displayed at a depth of "D3". As such, the object of the first group, the object of the second group, and other objects may be distinguished by a user.

Also, the display properties setting unit 160 sets a value of the display properties of each object according to the frequency of operations. In this case, the display properties setting unit 160 stores a predetermined value in the "display properties (3D display)" based on not by the "group" but by the "frequency of operations" of the display properties of each object.

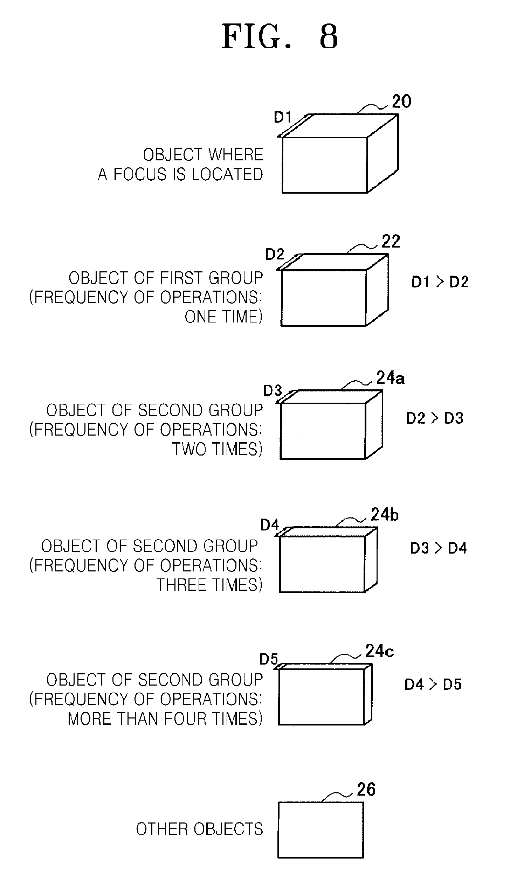

FIG. 8 is a view schematically illustrating objects displayed as a result of setting display properties of each object according to the frequency of operations. Referring to FIG. 8, any one of "D1 ", "D2", "D3", "D4", "D5", and "-(No 3D display)" may be stored in the "display properties (3D display)" of each object according to the frequency of operations and each object may be three dimensionally displayed at any one of depths of "D1 ", "D2", "D3", "D4", and "D5", or not three dimensionally displayed.

Also, the display properties may include any factors other than the depth of an object in the three dimensional display. For example, the display properties may include the type of an outline surrounding an object, color indicating an object, etc. For example, the object analysis unit 150 may set the type of an outline surrounding an object of the first group to be different from the type of an outline surrounding another object. In this case, for example, the display properties setting unit 160 stores a predetermined properties value indicating the type of an outline in the "display properties (outline)" instead of the "display properties (3D display)" of each object with respect to the object data memory unit 140. For example, the display properties setting unit 160 stores a "thick line" in the "display properties (outline)" of an object where the focus is located and a "dotted line" in the "display properties (outline)" of the object data of the first group.

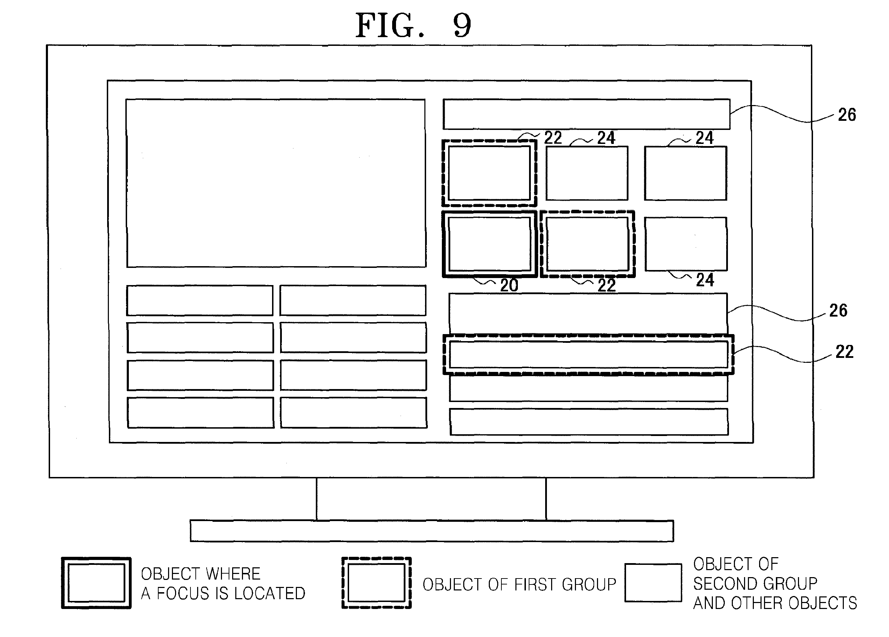

FIG. 9 is a view schematically illustrating a result of setting other display properties of an object of the first group. Referring to FIG. 9, since a "thick line" is stored in the "display properties (outline)" of the object 20 where the focus is located, the outline of the object 20 is indicated by a thick line. Also, since a "dotted line" is stored in the "display properties (outline)" of the object data of the object 22 of the first group, the outline of the object 22 is indicated by a dotted outline. As such, the object of the first group and other objects may be distinguished by a user.

As such, when the display properties of the objects of the first and second groups are set, the display properties setting unit 160 notifies the control unit 130 of the completion of setting of display properties.

### (Display data generation unit 170)

The display data generation unit 170 generates a display image to be displayed on the display unit 185 based on the display properties of each object stored in the object data memory unit 140. For example, the display data generation unit 170 generates a display image that three dimensionally displays an object of the first group, an object of the second group, and an object where the focus is located, based on the "display properties (3D display)" of each object stored in the object data memory unit 140. In detail, the display data generation unit 170 generates, for example, a first image for displaying only an object that is three dimensionally displayed and a second image for displaying only a portion other than the corresponding object. The display data generation unit 170 generates an image obtained by moving each object on the first image to the left direction as far as a misaligned width that embodies a depth of the "display properties (3D display)" of each object, as a first image (for right eye). Also, the display data generation unit 170 sets the first image to be the first image (for left eye). The display data generation unit 170 generates an image for the left eye by synthesizing the first image (for left eye) and a second image, and an image for the right eye by synthesizing the first image (for right eye) and the second image. As the position of an object displayed in the image for the right eye and the position of an object displayed in the image for the left eye are misaligned to each other, binocular parallax occurs between the right and left eyes of a user. The binocular parallax enables the user to see a three dimensionally displayed object.

### (Output unit 180)

The output unit 180 converts a display image input from the control unit 130 into an image signal and outputs the image signal to the display unit 185. An LCD shutter method, a polarized filter method, a parallax barrier method, or a lenticular method may be used as the 3D display method.

### (Display unit 185)

The display unit 185 displays a display image according to an image signal input from the output unit 180.

### (Setting change unit 190)

The setting change unit 190 allows a user to select the number of candidate values of display properties to be set. For example, when the depth of an object in 3D display is used as display properties, a 3D display setting screen is displayed on the display unit 185 and the number of depths to be set on each object is selected by a user operation. As a candidate value of a depth is selected by a user operation, the number of depths is selected as a result. When the operation of selecting the number of depths is detected by the operation detection unit 120, the setting change unit 190 receives information corresponding to the user operation from the operation detection unit 120 and recognizes a candidate value of the depth. For example, as illustrated in FIG. 7, "D1", "D2", "D3", "D4", "D5", and "-(No 3D display)" are recognized as the candidate value of a depth. The setting change unit 190 sets the recognized candidate value as control information of a process by the display properties setting unit 160. As a result, the display properties setting unit 160 stores any one of the corresponding candidate values in the "display properties (3D display)" with respect to the object data memory unit 140. As such, as the user selects and changes the value of the display properties, the operation of displaying each object may be changed. When the user selects, for example, a number four (4) as the value of the display properties, each object may be displayed at four levels as illustrated in FIG. 7. Also, when the user selects, for example, a number six (6), each object may be displayed at six levels as illustrated in FIG. 8.

Also, the setting change unit 190 allows a user to select any one of the predetermined two or more display properties candidates as the display properties. For example, a display setting screen is displayed on the display unit 185 and the type of display properties to be used is selected by a user operation. For example, the display properties candidates such as the depth of an object, the type of an outline surrounding an object, the color indicating an object, etc. are displayed on a corresponding setting screen. When an operation of selecting display properties among the corresponding display properties candidates is detected by the operation detection unit 120, the setting change unit 190 receives an input of information corresponding to the user operation from the operation detection unit 120 and recognizes the selected display properties. The setting change unit 190 sets the recognized display properties to be the control information of a process by the display properties setting unit 160. As a result, the display properties setting unit 160 sets a value to the selected display properties. As such, as the user selects the display properties, each object may be displayed according to display properties providing convenience. For example, when the user selects a depth of an object in 3D display as display properties, the object may be three dimensionally displayed as illustrated in FIG. 6. Also, for example, when the user selects the type of an outline surrounding an object, the object having an outline surrounding the object may be displayed as illustrated in FIG. 9.

Although the structure of the display control apparatus 100 is described above, the display control apparatus 100 may be typically embodied by a combination of hardware and software. The content acquisition unit 110 may be embodied by, for example, a tuner, a demodulator, and a TS decoder. The operation detection unit 120 may be embodied by, for example, an IC circuit and a photodiode which convert an infrared ray into an electrical signal. The control unit 130, the object data memory unit 140, the object analysis unit 150, the display properties setting unit 160, the display data generation unit 170, and the setting change unit 190 may be embodied by a CPU, a RAM, and a ROM. For example, a CPU may control the overall operation of the display control apparatus 100. Also, a ROM stores a program and data to control the operation of the display control apparatus 100. A RAM temporarily stores a program and data during execution of a process by the CPU. Also, the output unit 180 may be embodied by a video card. Also, the display unit 185 may be embodied by a display such as an LCD display, a plasma display, an organic EL display, an FED, etc.

### [3: Example of a process flow]

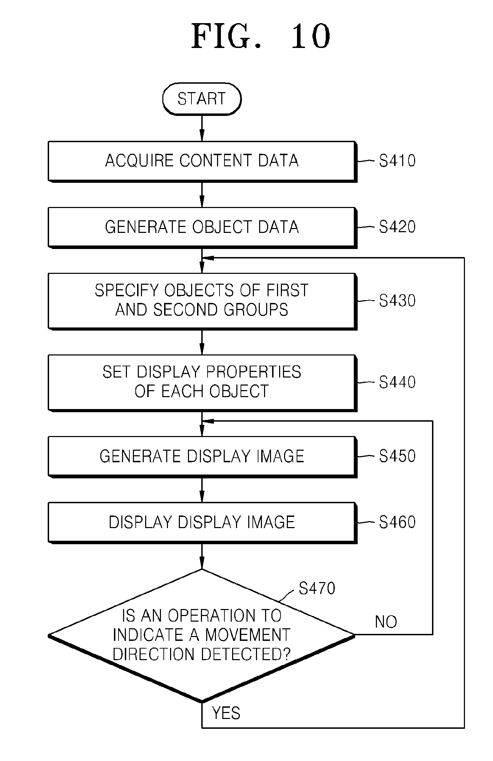

The flow of a display control process according to an embodiment of the present invention is described below with reference to FIG. 10. FIG. 10 is a flowchart for explaining an example of a process flow by the display control apparatus 100 according to an embodiment of the present invention. The example of a process flow shows a case in which an object of content data included in a broadcasting signal is displayed.

Referring to FIG. 10, in operation S41 0, the content acquisition unit 110 acquires content data from a broadcasting signal. In operation S420, the control unit 130 generates the above described object data based on additional data included in the content data and stores the generated object data in the object data memory unit 140.

Next, in operation S430, the object analysis unit 150 specifies an object to which a focus may be moved by a one-time operation indicating a movement direction, among the objects displayed on a screen and operable by a user, as an object of the first group. Also, the object analysis unit 150 may additionally specify an object to which the focus may be moved by two or more times of operations, as an object of the second group.

In operation S440, the display properties setting unit 160 sets display properties of an object of the first group so that an object of the first group and other objects may be distinguished by a user. Also, the display properties setting unit 160 may further set display properties of an object of the second group so that a user may distinguish the object of the first group, the object of the second group, and other objects. Also, the display properties of each object may be stored in the object data memory unit 140.

In operation S450, the display data generation unit 170 may generate a display image to be displayed on the display unit 185 based on the display properties of each object stored in the object data memory unit 140. In operation S460, the output unit 180 converts the display image input by the control unit 130 into an image signal and the display unit 185 displays a display image according to an image signal input by the output unit 180.

In operation S470, the control unit 130 determines whether the operation detection unit 120 detects an operation to indicate a movement direction of a focus. When the operation is detected, the program goes to operation S430. Otherwise, the program goes to operation S450.

Also, although it is not shown in FIG. 10, when new object data is generates, the program goes to operation s420. When new content data is acquired, the program goes to operation S410.

As described above, in the display control apparatus, the program, and the display control method according to the present invention, burden on a user regarding the movement of a focus in a user interface may be reduced.

While this invention has been particularly shown and described with reference to exemplary embodiments thereof, it will be understood by those skilled in the art that various changes in form and details may be made therein without departing from the spirit and scope of the invention as defined by the appended claims.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, etc. The computer readable recording medium can also be distributed over network coupled computer systems so that the computer readable code is stored and executed in a distributed fashion.

The present invention relates to a display control apparatus, a program, and a display control method and may be applied to television receivers, personal computers, mobile phones, etc.

## Claims

1. A display control apparatus comprising:
an operation detection unit detecting an operation indicating a movement direction;
an object analysis unit specifying an object to which a focus is moved by a one-time operation among objects displayed on a screen and operated by a user, as an object of a first group; and
a display properties setting unit setting display properties of the object of the first group so that the user distinguish the object of the first group and other objects.

2. The display control apparatus of claim 1, wherein the display properties comprise a depth of an object in three dimensional display, and the display properties setting unit sets a value of a depth of the object of the first group to be different from a value of a depth of other object.

3. The display control apparatus of claim 1, wherein the object analysis unit further specifies an object to which a focus is moved by two or more times of operations as an object of a second group, and the display properties setting unit further sets display properties of the object of the second group so that the user distinguish the object of the first group, the object of the second group, and other objects.

4. The display control apparatus of claim 1, wherein the object analysis unit further specifies a frequency of operations needed to move the focus to a corresponding object with respect to each object, and the display properties setting unit sets a value of the display properties of each object according to the frequency of operations.

5. The display control apparatus of claim 4, further comprising a setting change unit that allows the user to select the number of candidates of the set properties value.

6. The display control apparatus of claim 1, further comprising a setting change unit that allows the user to select any one of predetermined two or more candidates of display properties as the display properties.

7. A program for functioning a computer as a device, the computer detecting an operation to indicate a movement direction and controlling a display apparatus, wherein the device comprises:
an object analysis unit specifying an object to which a focus is moved by a one-time operation among objects displayed on a screen and operated by a user, as an object of a first group; and
a display properties setting unit setting display properties of the object of the first group so that the user distinguish the object of the first group and other objects.

8. A display control method comprising:
specifying an object to which a focus is moved by a one-time operation among objects displayed on a screen and operated by a user, as an object of a first group; and
setting display properties of the object of the first group so that the user distinguish the object of the first group and other objects.

9. The display control method of claim 8, wherein, in the setting of the display properties, the display properties comprise a depth of an object in three dimensional display, and a value of a depth of the object of the first group is set to be different from a value of a depth of other object.

10. The display control method of claim 8, wherein an object to which a focus is moved by two or more times of operations is further specified as an object of a second group, and display properties of the object of the second group are further set so that the user distinguish the object of the first group, the object of the second group, and other objects.

11. The display control method of claim 8, further comprising:
further specifying a frequency of operations needed to move the focus to a corresponding object with respect to each object, and setting a value of the display properties of each object according to the frequency of operations.

12. The display control method of claim 11, further comprising allowing the user to select the number of candidates of the set properties value.

13. The display control method of claim 8, further comprising allowing the user to select any one of predetermined two or more candidates of display properties as the display properties.
